# EUROPÄISCHE PATENTSCHRIFT

(11) **EP 0 921 369 B1**
(45) Veröffentlichungstag und Bekanntmachung des Hinweises auf die Patenterteilung: **26.04.2006**
(21) Anmeldenummer: 98121312.7
(22) Anmeldetag: 09.11.1998
(51) Int. Cl.: G01B 11/00, G01B 11/16

(54) **Messsystem zur Erfassung der Konturänderung von Zugproben bei verschiedenen Temperaturen**
Measuring device to determine the change in contour of a specimen for tensile test at various temperatures
Système de mesure pour déterminer le changement d'un contour d'un échantillon pour test de traction à plusieures températures

(30) Priorität: 05.12.1997 DE 19754129
(43) Veröffentlichungstag der Anmeldung: 09.06.1999
(73) Patentinhaber: Forschungszentrum Karlsruhe GmbH, 76133 Karlsruhe (DE)
(72) Erfinder: Walter, Mario, 74864 Fahrenbach (DE); Aktaa, Jarir Dr., 76131 Karlsruhe (DE); Klotz, Marco, 76646 Bruchsal (DE)

(56) Entgegenhaltungen:
- DE-C- 19 601 788
- US-A- 3 370 155
- PATENT ABSTRACTS OF JAPAN vol. 010, no. 351 (P-520), 27. November 1986 (1986-11-27) -& JP 61 149839 A (FUJI ELECTRIC CO LTD), 8. Juli 1986 (1986-07-08)
- PATENT ABSTRACTS OF JAPAN vol. 018, no. 106 (P-1697), 21. Februar 1994 (1994-02-21) -& JP 05 302880 A (ISHIKAWAJIMA HARIMA HEAVY IND CO LTD), 16. November 1993 (1993-11-16)

## Beschreibung

Die Erfindung betrifft ein Meßsystem zur Erfassung der Konturänderung von Zugproben bei verschiedenen Temperaturen nach dem Oberbegriff des Patentanspruchs 1.

Bewertungen von Bauteilen bezüglich ihrer Haltbarkeit bei den unterschiedlichsten Belastungsarten erfolgen heutzutage aufgrund der immer größer werdenden Rechnerkapazitäten überwiegend anhand von FEM- (Finite-Elemente-Methode) Berechnungen. Um auch zugelassene Verformungen der Bauteile und die daraus resultierenden inhomogenen Spannungszustände richtig beurteilen zu können, ist es notwendig Modelle zu entwickeln, die präzise Vorhersagen über das Verhalten des verwendeten Werkstoffs unter Last zulassen. Voraussetzung hierfür ist eine genaue Kenntnis der Materialkennwerte, welche u.a. durch spezielle bruchmechanische Versuchsreihen wie z.B. Zugversuche an gekerbten oder nicht gekerbten Proben oder Kerbschlagbiegeversuche ermittelt werden. Mit den daraus gewonnenen Ergebnissen erfolgt dann eine Modellanpassung für das gleiche Bauteil (Probe) um durch eine anschließende Verifizierung ein allgemeingültiges Werkstoffmodell erstellen zu können.

Aus der Patentschrift US 3,370,155 ist weiterhin ein Meßsystem bekannt, das sich zur Erfassung der Konturänderung von Zugproben bei verschiedenen, insbesondere hohen, Temperaturen, eignet. Das Meßsystem umfaßt eine Kammer, in die das Zuggestänge einer Werkstoffprüfmaschine hineinragt, eine in die Kammer eingebaute Lichtquelle, ein Sichtfenster und einen ebenfalls in die Kammer eingebauten Ventilator.

Um ein tiefes Verständnis für Versprödungsmechanismen zu erzielen und sie bei einer Modellbildung zu berücksichtigen, sind Zugversuche an gekerbten Proben im Tieftemperaturbereich der Versprödung - spröd-duktiler Übergangsbereich genannt -durchzuführen.

Aufgabe der Erfindung ist es, eine Meßsystem der e. g. Art so auszugestalten, daß damit Zugversuche in einem weiten Temperaturbereich durchgeführt und dokumentiert werden können.

Gelöst wird diese Aufgabe durch die Merkmale des Patentanspruchs 1. Die abhängigen Ansprüche beschreiben vorteilhafte Ausgestaltungen der Erfindung.

Ein besonderer Vorteil der Messapparatur besteht darin, daß wegen des minimierten Streulichts und durch Verminderung von Schlierenbildung durch das Temperiermedium die Kontur der Einkerbung mit ihrer Änderung beim Zugversuch mit hoher Auflösung erfaßt werden kann.

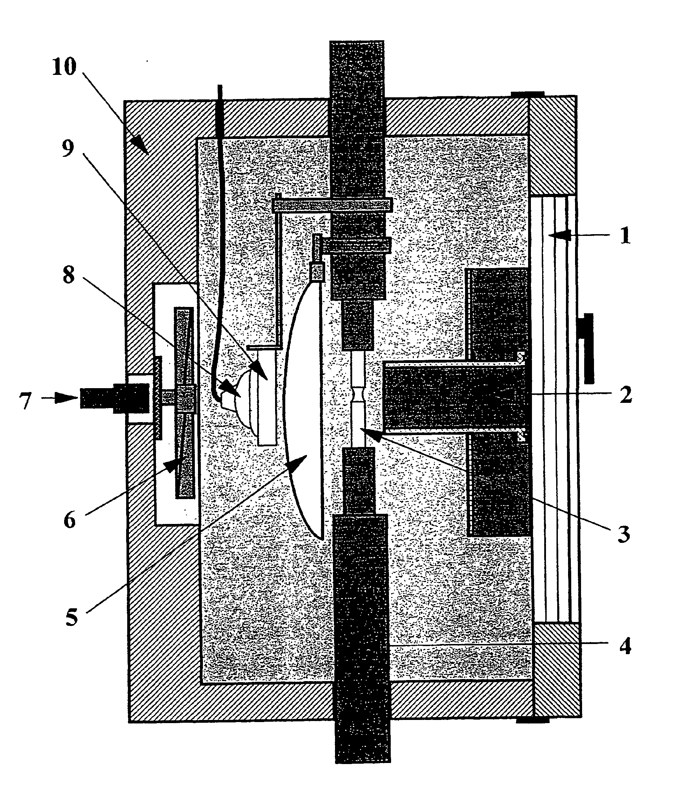

Die Erfindung wird im folgenden anhand eines Ausführungsbeispiels mit Hilfe der Figur näher erläutert.

Die Figur zeigt dabei den schematischen Aufbau eines Meßsystems.

Um ein Objekt mit einem optischen System anhand seiner Konturen zu vermessen ist es notwendig, seine Außenkanten so genau und scharf wie möglich auf dem vom System verwendeten Sensor abzubilden. Entscheidend hierfür sind die Licht- und Strömungsverhältnisse des umgebenden Mediums im Bereich des optischen Wegs. Im vorliegenden Fall werden mit einer Hochgeschwindigkeits-CCD-Kamera temperaturabhängige Versuche an Zugproben aufgezeichnet und ausgewertet.

Die Zugproben 3 befinden sich dabei in einer klimatisierbaren Kammer 10 und werden von außen durch einen optischen Zugang, hier ein öffenbares Fenster 1 aufgenommen. Das Fenster ist mehrschichtig aufgebaut. Um die Konturen so scharf wie möglich abzubilden, erfolgen die Aufnahmen im sogenannten Gegenlichtverfahren - d. h. das Meßobjekt 3 befindet sich zwischen Lichtquelle 8 und Kamera. Die Kamera ist hier nicht dargestellt. Sie befindet sich zur Messung rechts vom Fenster 1. Die Zugprobe 3 wird so als schwarze Fläche mit weißem Hintergrund auf dem Sensor der Kamera abgebildet. Damit die Lichtverhältnisse konstant bleiben während eines Versuchs, wird eine 12 V Kaltspiegel-Halogenlampe als Lichtquelle 8 eingesetzt (bei der Verwendung von Wechselstrom kommt es zu einer Schwebung zwischen der Netzfrequenz und der Bildaufnahmefrequenz). Da überwiegend metallische Werkstoffe untersucht werden, ist es notwendig ein gezieltes, möglichst diffuses Licht zu erzeugen, um die Reflexionen an der Probenoberfläche so gering wie möglich zu halten. Dazu wurde die Lampe 1 mit temperaturbeständigem Teflon im Bereich des Strahlungskegels verkleidet. Dies dient als Streuscheibe. Der gleiche Effekt kann prinzipiell auch mit einer Milchglasscheibe erzielt werden, Teflon hat jedoch den Vorteil daß es mechanisch leicht bearbeitbar ist und so auch gleichzeitig als Teil zur festen Fixierung der Lampe 3 in der Kammer 10 eingesetzt wird. Zur Temperierung der Kammer 10 wird bei Hochtemperaturversuchen Luft erwärmt und zur gleichmäßigen Verteilung mit einem Umwälzventilator 6 in die Kammer geblasen. Der Ventilator 6 befindet sich an der Rückwand der Kammer 10 in Höhe der Probe 3. Unmittelbar hinter dem Ventilator 6 befinder sich die Zufuhr für das Temperiermedium. Bei Tieftemperaturversuchen wird die Kammer mit z. B. Flüssiggas betrieben das ebenfalls durch den Ventilator verteilt wird. Aufgrund der Strömungsverhältnisse kommt es in beiden Fällen zu einem Flimmern - es scheint optisch so, als wenn sich die Probe 3 bewegen würde. Um die dadurch verursachte Meßungenauigkeit zu beseitigen, ist zur Strömungsumlenkung im Bereich des optischen Wegs direkt hinter der Probe ein Uhrglas als Strömungsumlenkung 5 montiert. Zusätzlich ist am Fenster 1 ein Sichtrohr 2 angebracht welches bis kurz vor die Probe 3 reicht. Das Sichtrohr 2 ist in einer an der Kammer 10 verschraubten Halterung geführt und wird mit Hilfe einer Feder gegen das Fenster 1 gedrückt, sodaß bei unterschiedlichen Temperaturen das Anliegen des Sichtrohres 2 an das Fenster 1 gewährleistet ist. Das Sichtrohr 2 ist innen und außen mattschwarz lackiert um die Probe auch vor den leichten Reflexionen innerhalb der Kammer 10, die innen ebenfalls geschwärzt sein kann, abzuschirmen. Alle durchgeführten konstruktiven Modifikationen führen zu einer deutlich erhöhten Abbildungs- und damit Meßgenauigkeit über einen breiten Temperaturbereich hinweg.

### Bezugszeichenliste:

- 1.: Sichtfenster
- 2.: Sichtrohr
- 3.: Zugprobe
- 4.: Zuggestänge
- 5.: Strömongsumlenkung
- 6.: Ventilator
- 7.: Zufuhr für Temperiermedium
- 8.: Lichtquelle
- 9.: Streuscheibe
- 10.: Kammer

## Patentansprüche

1. Meßsystem zur Erfassung der Konturänderung von Zugproben bei verschiedenen Temperaturen bestehend aus einer die Zugprobe umschließenden Kammer, in die das Zuggestänge einer Werkstoffprüfmaschine hineinragt, einem Sichtfenster und einem Venilator zur Verteilung eines Temperiermediums **gekennzeichnet durch**:
a) eine Lichtquelle (8) mit einer Streuscheibe (9) auf einer Seite der Zugprobe (3),
b) ein Sichtrohr (2) zwischen Zugprobe (3) und Sichtfenster (1) auf der anderen Seite der Zugprobe (3),
c) eine Kamera zur Aufnahme der Zugprobe (3) **durch** das Sichtrohr (2) und
d) eine lichtdurchlässige Strömungsumlenkung (5) zwischen Lichtquelle (8) und Zugprobe (3).

2. Meßsystem nach Anspruch 1, **dadurch gekennzeichnet, daß** die Lichtquelle (8) eine Halogen-Kaltlichtspiegel-Gleichstromlampe ist.

3. Meßsystem nach Anspruch 1 oder 2, **dadurch gekennzeichnet, daß** die Streuscheibe (9) eine Teflonscheibe ist.

4. Meßsystem nach einem der Ansprüche 1 bis 3, **dadurch gekennzeichnet, daß** die Strömungsumlenkung (5) ein gegen die Lichtquelle (8) gewölbtes Uhrglas ist.

5. Meßsystem nach einem der Ansprüche 1 bis 4, **dadurch gekennzeichnet, daß** das Sichtrohr (2) innen geschwärzt ist.

6. Meßsystem nach einem der Ansprüche 1 bis 5, **dadurch gekennzeichnet, daß** die Innenseite der Kammer (10) geschwärzt ist.

7. Meßsystem nach einem der Ansprüche 1 bis 6, **dadurch gekennzeichnet, daß** das Sichtrohr (2) über die Zugprobe (3) hinausreicht und im Bereich der Zugprobe (3) geschlitzt ist.

8. Meßsystem nach einem der Ansprüche 1 bis 7, **dadurch gekennzeichnet, daß** der Ventilator (6) während der Messung abschaltbar ist.

9. Meßsystem nach einem der Ansprüche 1 bis 8, **dadurch gekennzeichnet, daß** die Kamera eine CCD-Kamera ist.

10. Meßsystem nach einem der Ansprüche 1 bis 9, **dadurch gekennzeichnet, daß** die Streuscheibe (9) in die Strömungsumlenkung (5) integriert ist.

## Claims

1. Measurement system to record the contour variation of tensile specimens at various temperatures, consisting of a chamber enclosing the tensile specimen, into which the tension rod of a materials testing machine protrudes, an inspection window, and a ventilator to distribute a thermostating medium,
**characterized by**:
a) A light source (8) with a diffusing plate (9) on the side of the tensile specimen (3),
b) an inspection tube (2) between the tensile specimen (3) and the inspection window (1) on the other side of the tensile specimen (3),
c) a camera for recording the tensile specimen (3) through the inspection tube (2), and
d) a translucent flow divertor (5) between the light source (8) and the tensile specimen (3).

2. Measurement system according to Claim 1, **characterized by** the light source (8) being a halogen-metal oxide vaporized mirror-d.c. lamp.

3. Measurement system according to Claim 1 or 2, **characterized by** the diffusing plate (9) being a teflon plate.

4. Measurement system according to one of Claims 1 through 3, **characterized by** the flow divertor (5) being a crystal that is curved towards the light source (8).

5. Measurement system according to one of Claims 1 through 4, **characterized by** the inspection tube (2) being blackened inside.

6. Measurement system according to one of Claims 1 through 5, **characterized by** the inner wall of the chamber (10) being blackened.

7. Measurement system according to one of Claims 1 through 6, **characterized by** the inspection tube (2) extending beyond the tensile specimen (3) and being slotted in the range of the tensile specimen (3).

8. Measurement system according to one of Claims 1 through 7, **characterized by** the ventilator (6) being able to be switched off during measurement.

9. Measurement system according to one of Claims 1 through 8, **characterized by** the camera being a CCD camera.

10. Measurement system according to one of Claims 1 through 9, **characterized by** the diffusing plate (9) being integrated in the flow divertor (5).

## Revendications

1. Système de mesure permettant l'enregistrement des variations du contour d'éprouvettes de traction à des températures différentes, consistant en une chambre entourant l'éprouvette dans laquelle dépassent les tiges de traction d'une machine d'essai de matériaux, un voyant et un ventilateur pour la dispersion d'un fluide d'équilibrage de température, **caractérisé par**:
a) une source lumineuse (8) avec un diffuseur (9) d'un côté de l'éprouvette de traction (3),
b) un tube de visée (2) situé entre l'éprouvette de traction (3) et le voyant (1) du côté opposé de l'éprouvette de traction (3),
c) une caméra pour photographier l'éprouvette de traction (3) par le tube de visée (2) et
d) une déviation transparente de l'écoulement (5) placée entre la source limineuse (8) et l'éprouvette de traction (3).

2. Système de mesure selon la revendication (1), **caractérisé en ce que** la source lumineuse (8) est une lampe à halogène à miroir froid à courant continu.

3. Système de mesure selon la revendication (1) ou (2), **caractérisé en ce que** le diffuseur (9) est un disque en Téflon.

4. Système de mesure selon l'une quelconque des revendications 1 à 3, **caractérisé en ce que** la déviation de l'écoulement (5) est un verre de montre bombé contre la source lumineuse (8).

5. Système de mesure selon l'une quelconque des revendications 1 à 4, **caractérisé en ce que** le tube de visée (2) est noirci à l'intérieur.

6. Système de mesure selon l'une quelconque des revendications 1 à 5, **caractérisé en ce que** la surface intérieure de la chambre (10) est noirci.

7. Système de mesure selon l'une quelconque des revendications 1 à 6, **caractérisé en ce que** le tube de visée (2)' dépasse l'éprouvette de traction et qu'il est fendu dans le domaine de l'éprouvette de traction (3).

8. Système de mesure selon l'une quelconque des revendications 1 à 7, **caractérisé en ce que** le ventilateur (6) peut être arrêté pendant la mesure.

9. Système de mesure selon l'une quelconque des revendications 1 à 8, **caractérisé en ce que** la caméra est une caméra CCD.

10. Système de mesure selon l'une quelconque des revendications 1 à 9, **caractérisé en ce que** le diffuseur (9) est intégré dans la déviation de l'écoulement (5).
